(19) Europäisches Patentamt
European Patent Office
Office européen des brevets

(11) Veröffentlichungsnummer: **0 403 837 A2**

(12) **EUROPÄISCHE PATENTANMELDUNG**

(21) Anmeldenummer: **90110170.9**

(22) Anmeldetag: **29.05.90**

(51) Int. Cl.5: **C08L 69/00, C08L 51/04, //(C08L69/00,69:00,51:04), (C08L51/04,69:00,69:00)**

(30) Priorität: **10.06.89 DE 3919043**

(43) Veröffentlichungstag der Anmeldung: **27.12.90 Patentblatt 90/52**

(84) Benannte Vertragsstaaten: **DE ES FR GB IT NL**

(71) Anmelder: **BAYER AG**

**D-5090 Leverkusen 1 Bayerwerk(DE)**

(72) Erfinder: **Eckel, Thomas, Dr.**
**Gneisenaustrasse 15 a**
**D-4047 Dormagen 1(DE)**
Erfinder: **Freitag, Dieter, Dr.**
**Hasenheide 10**
**D-4150 Krefeld(DE)**
Erfinder: **Westeppe, Uwe, Dr.**
**Vogelskamp 72**
**D-4020 Mettmann(DE)**
Erfinder: **Wittmann, Dieter, Dr.**
**Wolfskaul 4**
**D-5000 Köln 80(DE)**

(54) **Polycarbonat-Formmassen.**

(57) Als thermoplastische Formmassen geeignete Gemische aus aromatischen Polycarbonaten auf Basis von substituierten Dihydroxydiphenylcycloalkanen, anderen aromatischen Polycarbonaten (beispielsweise Bisphenol-A-Polycarbonaten) und bepfropften, teilchenförmigen Dienkautschuken, ein Verfahren zur Herstellung dieser Gemische und ihre Verwendung zur Herstellung von thermoplastischen Formkörpern,vornehmlich durch Spritzguß.

EP 0 403 837 A2

## Polycarbonat-Formmassen

Die Erfindung betrifft als thermoplastische Formmassen geeignete Gemische aus aromatischen Polycarbonaten auf Basis von substituierten Dihydroxydiphenylcycloalkanen, anderen aromatischen Polycarbonaten, (die beispiels Bisphenol-A-Einheiten enthalten) und bepfropften, teilchenförmigen Dienkautschuken, ein Verfahren zur Herstellung dieser Gemische durch Mischen der Bestandteile bei erhöhter Temperatur und ihre Verwendung zur Herstellung von thermoplastischen Formkörpern vornehmlich durch Spritzguß.

Formmassen aus aromatischen Polycarbonaten auf Basis von Bisphenol-A-Einheiten und ABS-Kunststoffen (mit Styrol und Acrylnitril bepfropfte Dienkautschuke) sind bekannt. Sie besitzen im allgemeinen sehr hohe Kerbschlagzähigkeit, speziell bei tieferen Temperaturen. In der Praxis hat sich die relativ geringe Wärmeformbeständigkeit dieser Formmassen als Nachteil erwiesen, z.B. bei der Herstellung von Kraftfahrzeugteilen, die Lackierbedingungen, d.h. Temperaturen von 140 bis 160 °C, ausgesetzt werden müssen.

Es wurde gefunden, daß die Wärmeformbestandigkeit solcher Formmassen wesentlich verbessert wird, wenn man spezielle Polycarbonate auf Basis von substituierten Dihydroxydiphenylcycloalkanen zusetzt. Die gute Kerbschlagzähigkeit bleibt in diesen modifizierten Formmassen erhalten.

Gegenstand der Erfindung sind als thermoplastische Formmassen geeignete Polymeren-Gemische aus

A) 5 bis 99 Gew.-Teilen, vorzugsweise 40 bis 98 Gew.-Teilen, insbesondere 60 bis 97 Gew.-Teilen, bezogen auf das Polymeren-Gemisch, eines aromatischen Polycarbonats auf Basis von substituierten Dihydroxydiphenylcycloalkanen,

B) 5 bis 99 Gew.-Teilen, vorzugsweise 40 bis 98 Gew.-Teilen, insbesondere 60 bis 97 Gew.-Teile, bezogen auf das Polymeren-Gemisch, eines anderen aromatischen Polycarbonats (das z.B Bisphenol-A-Einheiten enthält),

C) 1 bis 95 Gew.-Teilen, vorzugsweise 2 bis 60 Gew.-Teilen, insbesondere 3 bis 40 Gew.-Teilen, bezogen auf das Polymeren-Gemisch, eines Pfropfpolymerisats aus

C.1 5 bis 90, vorzugsweise 20 bis 80 Gewichtsteilen einer Mischung aus

C.1.1 50 bis 95 Gew.-%, vorzugsweise 60 bis 95 Gew.-% Styrol, α-Methylstyrol, $C_1$-$C_4$-Alkyl- oder Halogen-kernsubstituierten Styrolen, Methacrylsäureestern, Acrylsäureestern oder Mischungen daraus und

C.1.2 5 bis 50 Gew.-%, vorzugsweise 5 bis 40 Gew.-% Acrylnitril, Methacrylnitril, Methacrylsäureestern, Acrylsäureestern, Maleinimiden, $C_1$-$C_4$-Alkyl-substituierten Maleinderivaten, Phenyl-N-substituierten Maleinimiden oder Mischungen daraus, auf

C.2 10 bis 95 Gew.-Teile, vorzugsweise 20 bis 80 Gew.-Teile Dienkautschuk mit einem mittleren Teilchendurchmesser $d_{50}$ von 0,09 bis 1 µm, vorzugsweise 0,09 bis 0,6 µm und einem Gelgehalt von mehr als 50 Gew.-%, vorzugsweise mehr als 70 Gew.-%, insbesondere 73 bis 98 Gew.-%, bezogen auf C.2.

<u>Polycarbonate A</u>

Polycarbonate A im Sinne der Erfindung sind hochmolekulare, thermoplastische, aromatische Polycarbonate mit Molekulargewichten $M_w$ (Gewichtsmittel) von mindestens 10 000, vorzugsweise von 20 000 bis 300 000, die bifunktionelle Struktureinheiten der Formel (I) enthalten,

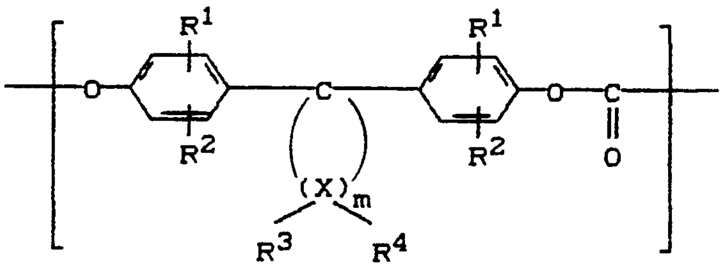
(I)

worin

$R^1$ und $R^2$ unabhängig voneinander Wasserstoff, Halogen, bevorzugt Chlor oder Brom, $C_1$-$C_8$-Alkyl, $C_5$-$C_6$-Cycloalkyl, $C_6$-$C_{10}$-Aryl, bevorzugt Phenyl, und $C_7$-$C_{12}$-Aralkyl, bevorzugt Phenyl-$C_1$-$C_4$-Alkyl, insbesondere Benzyl,

m eine ganze Zahl von 4 bis 7, bevorzugt 4 oder 5,

$R^3$ und $R^4$ für jedes X individuell wählbar, unabhängig voneinander Wasserstoff oder $C_1$-$C_6$-Alkyl

und

X Kohlenstoff bedeuten,

mit der Maßgabe, daß an mindestens einem Atom X $R^3$ und $R^4$ gleichzeitig Alkyl bedeuten

Ausgangsprodukte für die Polycarbonate A sind Dihydroxydiphenylcycloalkane der Formel (II),

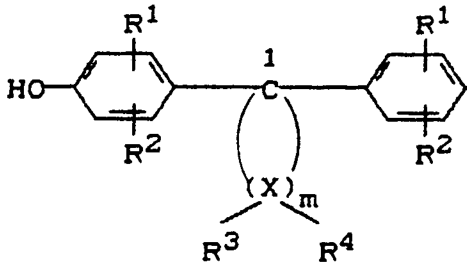

(II)

worin

X, $R^1$, $R^2$, $R^3$, $R^4$ und m die für Formel (I) genannte Bedeutung haben.

Bevorzugt sind an 1 bis 2 Atomen X, insbesondere nur an einem Atom X, $R^3$ und $R^4$ gleichzeitig Alkyl. Bevorzugter Alkylrest ist Methyl; die X-Atome in $\alpha$-Stellung zu dem di-phenyl-substituierten C-Atom (C.1) sind bevorzugt nicht dialkylsubstituiert, dagegen ist die Alkyldisubstitution in $\beta$-Stellung zu C.1 bevorzugt.

Bevorzugt sind Dihydroxydiphenylcycloalkane mit 5 und 6 Ring-C-Atomen im cycloaliphatischen Rest (m = 4 oder 5 in Formel (II)), beispielsweise die Diphenole der Formeln (IIa) bis (II c),

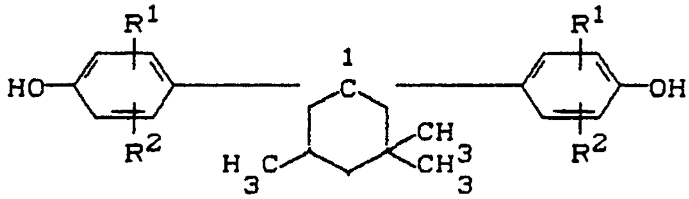

(II a)

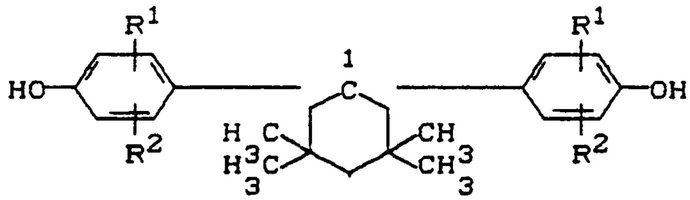

(II b)

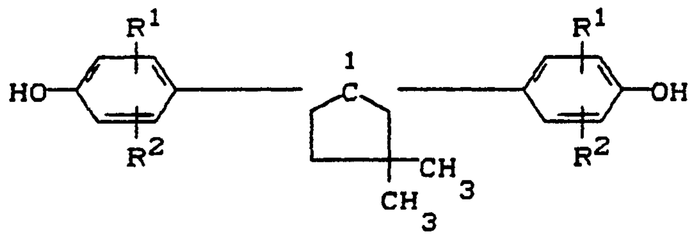

(II c)

wobei das 1,1-Bis-(4-hydroxyphenyl)-3,3,5-trimethylcyclohexan (Formel (II a) mit $R^1$ und $R^2$ gleich H) besonders bevorzugt ist.

Die Polycarbonate A können gemäß der Deutschen Offenlegungsschrift 3 832 396 aus Diphenolen der Formel (II) hergestellt werden.

Es können sowohl ein Diphenol der Formel (II) unter Bildung von Homopolycarbonaten als auch mehrere Diphenole der Formel (II) unter Bildung von Copolycarbonaten verwendet werden.

Außerdem können die Diphenole der Formel (II) auch im Gemisch mit anderen Diphenolen, beispielsweise mit denen der Formel (III)

HO-Z-OH (III)

zur Herstellung von hochmolekularen, thermoplastischen, aromatischen Polycarbonaten verwendet werden.

Geeignete andere Diphenole der Formel (III) sind solche, in denen Z ein aromatischer Rest mit 6 bis 30 C-Atomen ist, der einen oder mehrere aromatische Kerne enthalten kann, substituiert sein kann und aliphatische Reste oder andere cycloaliphatische Reste als die der Formel (II) oder Heteroatome als Brückenglieder enthalten kann.

Beispiele für Diphenole der Formel (II) sind
Hydrochinon,
Resorcin,
Dihydroxydiphenyle,
Bis-(hydroxyphenyl)-alkane,
Bis-(hydroxyphenyl)-cycloalkane
Bis-(hydroxyphenyl)-sulfide,
Bis-(hydroxyphenyl)-ether,
Bis-(hydroxyphenyl)-ketone,
Bis-(hydroxyphenyl)-sulfone,
Bis-(hydroxyphenyl)-sulfoxide,
$\alpha,\alpha'$-Bis-(hydroxyphenyl)-diisopropylbenzole
sowie deren kernalkylierte und kernhalogenierte Verbindungen.

Diese und weitere geeignete andere Diphenole sind z.B. in den US-PS 3 028 365, 2 999 835, 3 148 172, 3 275 601, 2 991 273, 3 271 367, 3 062 781, 2 970 131 und 2 999 846, in den deutschen Offenlegungsschriften 1 570 703, 2 063 050, 2 063 052, 2 211 095, der französischen Patentschrift 1 561 518 und in der Monographie "H. Schnell, Chemistry and Plastics of Polycarbonates, Interscience Publishers, New York 1964", beschrieben.

Bevorzugte andere Diphenole sind beispielsweise:
4,4'-Dihydroxydiphenyl,
2,2-Bis-(4-hydroxyphenyl)-propan,
2,4-Bis-(4-hydroxyphenyl)-2-methylbutan,
1,1-Bis-(4-hydroxyphenyl)-cyclohexan,
$\alpha,\alpha'$-Bis-(4-hydroxyphenyl)-p-diisopropylbenzol,
2,2-Bis-(3-methyl-4-hydroxyphenyl)-propan,
2,2-Bis-(3-chlor-4-hydroxyphenyl)-propan,
Bis-(3,5-dimethyl-4-hydroxyphenyl)-methan,
2,2-Bis-(3,5-dimethyl-4-hydroxyphenyl)-propan,
Bis-(3,5-dimethyl-4-hydroxyphenyl)-sulfon,
2,4-Bis-(3,5-dimethyl-4-hydroxyphenyl)-2-methylbutan,
1,1-Bis-(3,5-dimethyl-4-hydroxyphenyl)-cyclohexan,
$\alpha,\alpha'$-Bis-(3,5-dimethyl-4-hydroxyphenyl)-p-diisopropylbenzol,
2,2-Bis-(3,5-dichlor-4-hydroxyphenyl)-propan und
2,2-Bis-(3,5-dibrom-4-hydroxyphenyl)-propan.

Besonders bevorzugte Diphenole der Formel (III) sind beispielsweise:
2,2-Bis-(4-hydroxyphenyl)-propan,
2,2-Bis-(3,5-dimethyl-4-hydroxyphenyl)-propan,
2,2-Bis-(3,5-dichlor-4-hydroxyphenyl)-propan,
2,2-Bis-(3,5-dibrom-4-hydroxyphenyl)-propan und
1,1-Bis-(4-hydroxyphenyl)-cyclohexan.

Insbesondere ist 2,2-(4-hydroxyphenyl)-propan bevorzugt.

Die anderen Diphenole können sowohl einzeln als auch im Gemisch eingesetzt werden.

Das molare Verhältnis von Diphenolen der Formel (II) zu den gegebenenfalls mitzuverwendenden anderen Diphenolen der Formel (III) ist 100 Mol.-% (II) zu 0 Mol.-% (III) bis 20 Mol.-% (II) zu 80 Mol.-% (III), vorzugsweise 100 Mol.-% (II) zu 0 Mol.-% (III) bis 25 Mol.-% (II) zu 75 Mol.-% (III).

Die hochmolekularen Polycarbonate aus den Diphenolen der Formel (II), gegebenenfalls in Kombination mit anderen Diphenolen können nach den bekannten Polycarbonat-Herstellungsverfahren hergestellt werden. Dabei können die verschiedenen Diphenole sowohl statistisch als auch blockweise miteinander verknüpft sein.

Die erfindungsgemäßen Polycarbonate können in an sich bekannter Weise verzweigt sein. Wenn Verzweigung gewünscht wird, kann sie in bekannter Weise durch Einkondensieren geringer Mengen, vorzugsweise zwischen 0,05 und 2,0 Mol.-% (bezogen auf eingesetzte Diphenole), an drei- oder mehr als dreifunktionellen Verbindungen, insbesondere solchen mit drei oder mehr als drei phenolischen Hydroxylgruppen erreicht werden. Einige Verzweiger mit drei oder mehr als drei phenolischen Hydroxylgruppen

sind:
Phloroglucin,
4,6-Dimethyl-2,4,6-tri-(4-hydroxyphenyl)-hepten-2,
4,6-Dimethyl-2,4,6-tri-(4-hydroxyphenyl)-heptan,
1,3,5-Tri-(4-hydroxyphenyl)-benzol,
1,1,1-Tri-(hydroxyphenyl)-ethan,
Tri-(4-hydroxyphenyl)-phenylmethan,
2,2-Bis-(4,4-bis-(4-hydroxyphenyl)-cyclohexyl-propan,
2,4-Bis-(4-hydroxyphenyl-isopropyl)-phenol,
2,6-Bis-(2-hydroxy-5-methyl-benzyl)-4-methylphenol,
2-(4-Hydroxyphenyl)-2-(2,4-dihydroxyphenyl)-propan,
Hexa-(4-(4-hydroxyphenyl-isopropyl)-phenyl)-orthoterephthalsäureester,
Tetra-(4-hydroxyphenyl)-methan,
Tetra-(4-(4-hydroxyphenyl-isopropyl)-phenoxy)-methan und
1,4-Bis-(4′-,4″-dihydroxytriphenyl)-methyl)-benzol.

Einige der sonstigen dreifunktionellen Verbindungen sind 2,4-Dihydroxybenzoesäure, Trimesinsäure, Cyanurchlorid und 3,3-Bis-(3-methyl-4-hydoxyphenyl)-2-oxo-2,3-dihydroindol.

Als Kettenabbrecher zur an sich bekannten Regelung des Molekulargewichtes der Polycarbonate A dienen monofunktionelle Verbindungen in üblichen Konzentrationen. Geeignete Verbindungen sind z.B. Phenol, tert.-Butylphenole oder andere Alkyl-$C_1$-$C_7$-substituierte Phenole. Zur Regelung des Molekulargewichts sind insbesondere kleine Mengen Phenole der Formel (IV) geeignet,

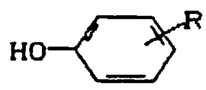

(IV)

worin R einen verzweigten $C_8$- und/oder $C_9$-Alkylrest darstellt. Bevorzugt ist im Alkylrest R der Anteil an $CH_3$-Protonen zwischen 47 und 89 % und der Anteil der CH- und $CH_2$-Protonen zwischen 53 und 11 %; ebenfalls bevorzugt ist R in o- und/oder p-Stellung zur OH-Gruppe, und besonders bevorzugt die obere Grenze des ortho-Anteils 20 %. Die Kettenabbrecher werden im allgemeinen in Mengen von 0,5 bis 10, bevorzugt 1,5 bis 8 Mol.-%, bezogen auf eingesetzte Diphenole, eingesetzt.

Die Polycarbonate A können vorzugsweise durch Phasengrenzflächenpolykondensation (vgl. H. Schnell, "Chemistry and Physics of Polycarbonates", Polymer Reviews, Vol. IX, Seite 33 ff., Interscience Publ., 1964) in an sich bekannter Weise hergestellt werden. Hierbei werden die Diphenole der Formel (II) in wäßrig alkalischer Phase gelöst. Zur Herstellung von Copolycarbonaten mit anderen Diphenolen werden Gemische von Diphenolen der Formel (II) und den anderen Diphenolen, beispielsweise denen der Formel (III), eingesetzt. Zur Regulierung des Molekulargewichts können Kettenabbrecher, z.B. der Formel (IV), zugegeben werden. Dann wird in Gegenwart einer inerten, vorzugsweise Polycarbonat lösenden, organischen Phase mit Phosgen nach der Methode der Phasengrenzflächenpolykondensation umgesetzt. Die Reaktionstemperatur ist 0 bis 40 °C.

Die gegebenenfalls mitverwendeten Verzweiger (bevorzugt 0,05 bis 2,0 Mol.-%) können entweder mit den Diphenolen in der wäßrig alkalischen Phase vorgelegt werden oder in dem organischen Lösungsmittel gelöst vor der Phosgenierung zugegeben werden.

Neben den Diphenolen der Formel (II) und gegebenenfalls anderen Diphenolen (III) können auch deren Mono-und/oder Bis-chlorkohlensäureester mitverwendet werden, wobei diese in organischen Lösungsmitteln gelöst zugegeben werden. Die Menge an Kettenabbrechern sowie an Verzweigern richtet sich dann nach der molaren Menge von Diphenolat-Resten entsprechend Formel (II) und gegebenenfalls Formel (III): bei Mitverwendung von Chlorkohlensäureestern kann die Phosgenmenge in bekannter Weise entsprechend reduziert werden.

Geeignete organische Lösungsmittel für die Kettenabbrecher sowie gegebenenfalls für die Verzweiger und die Chlorkohlensäureester sind beispielsweise Methylenchlorid, Chlorbenzol, Aceton, Acetonitril sowie Mischungen dieser Lösungsmittel, insbesondere Mischungen aus Methylenchlorid und Chlorbenzol. Gegebenenfalls können die verwendeten Kettenabbrecher und Verzweiger im gleichen Solvens gelöst werden.

Als organische Phase für die Phasengrenzflächenpolykondensation dient beispielsweise Methylenchlorid, Chlorbenzol sowie Mischungen aus Methylenchlorid und Chlorbenzol.

Als wäßrige alkalische Phase dient beispielsweise wäßrige NaOH-Lösung.

Die Herstellung der Polycarbonate A nach Phasengrenzflächenkondensation kann in üblicher Weise

durch Katalysatoren wie tertiare Amine, insbesondere tertiare aliphatische Amine wie Tributylamin oder Triethylamin katalysiert werden; die Katalysatoren können in Mengen von 0,05 bis 10 Mol.-%, bezogen auf Mole an eingesetzten Diphenolen eingesetzt werden. Die Katalysatoren können vor Beginn der Phosgenierung oder während oder auch nach der Phosgenierung zugesetzt werden.

Die Polycarbonate A können auch nach dem bekannten Verfahren in homogener Phase, dem sogenannten "Pyridinverfahren" sowie nach dem bekannten Schmelzumesterungsverfahren unter Verwendung von beispielsweise Diphenylcarbonat anstelle von Phosgen hergestellt werden.

Die Polycarbonate A haben bevorzugt Molekulargewichte $\overline{M}_w$(Gewichtsmittel, ermittelt durch Gelchromatographie nach vorheriger Eichung) von mindestens 10 000, besonders bevorzugt von 20 000 bis 300 000 und insbesondere von 20 000 bis 80 000. Sie Können linear oder verzweigt sein, sie sind Homopolycarbonate oder Copolycarbonate auf Basis der Diphenole der Formel (II).

Durch den Einbau der Diphenole der Formel (II) sind Polycarbonate mit hoher Wärmeformbeständigkeit entstanden, die auch sonst ein gutes Eigenschaftsbild haben. Dies gilt insbesondere für die Polycarbonate auf Basis der Diphenole der Formel (II), in denen m 4 oder 5 ist, und ganz besonders für die Polycarbonate auf Basis der Diphenole (II a), worin $R^1$ und $R^2$ unabhängig voneinander die für Formel (II) genannte Bedeutung haben und besonders bevorzugt Wasserstoff sind.

Die besonders bevorzugten Polycarbonate A sind also solche, in denen in den Struktureinheiten der Formel (I) m = 4 oder 5 ist und ganz besonders solche aus Einheiten der Formel (V)

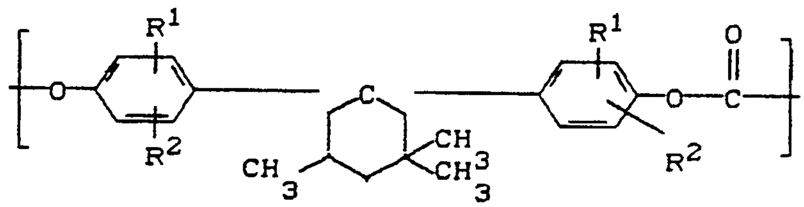

(V)

worin

$R^1$ und $R^2$ die für Formel (I) genannte Bedeutung haben, besonders bevorzugt aber Wasserstoff sind.

Diese Polycarbonate auf Basis der Diphenole der Formel (II a), worin insbesondere $R^1$ und $R^2$ Wasserstoff sind, besitzen zur hohen Wärmeformbeständigkeit außerdem eine gute UV-Stabilität und ein gutes Fließverhalten in der Schmelze, was nicht zu erwarten war.

Durch die beliebige Komposition mit anderen Diphenolen, insbesondere mit denen der Formel (III) lassen sich zudem die Polycarbonateigenschaften in günstiger Weise variieren. In solchen Copolycarbonaten sind die Diphenole der Formel (II) in Mengen von 100 Mol.-%. bis 20 Mol.-%, vorzugsweise in Mengen von 100 Mol.-%. bis 25 Mol.-% bezogen jeweils auf die Gesamtmenge von 100 Mol.-% an Diphenoleinheiten im Polycarbonat, enthalten.

Polycarbonate B

Erfindungsgemäß geeignete, thermoplastische, aromatische Polycarbonate B sind solche auf Basis der Diphenole der Formel (VI)

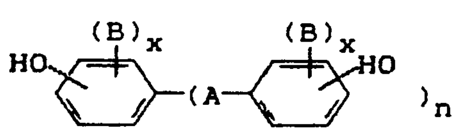

(VI)

worin

A eine Einfachbindung, $C_1$-$C_5$-Alkylen, $C_2$-$C_5$-Alkyliden, ein $C_5$-$C_6$-Cycloalkyliden, -S-, $SO_2$- oder ein Rest gemäß Formel (VII)

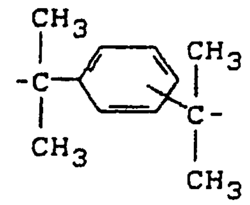

(VII)

ist,
B Wasserstoff, lineares $C_1$-$C_{10}$-Alkyl, verzweigtes $C_3$-$C_{20}$-Alkyl, $C_6$-$C_{20}$-Aryl oder Halogen wie Chlor oder Brom ist,
x 0, 1 oder 2 und
n 1 oder 0 sind,
und gegebenenfalls zusätzlich der Formel (VI a)

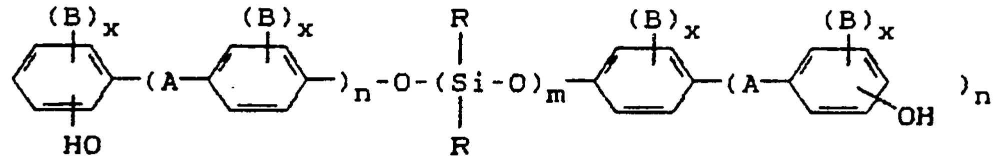

(VI a)

worin A, B, x und n die zuvor genannte Bedeutung haben, die Reste R gleich oder verschieden sind und linearem $C_1$-$C_{10}$-Alkyl, verzweigtem $C_3$-$C_{20}$-Alkyl, $C_6$-$C_{20}$-Aryl entsprechen und m eine ganze Zahl zwischen 5 und 100, vorzugsweise zwischen 20 und 80 ist.

Erfindungsgemäß geeignete Polycarbonate B sind sowohl Homopolycarbonate als auch Copolycarbonate, wobei die Diphenole der Formel (VI a) nur für die Herstellung von Copolycarbonaten mit den Diphenolen der Formel (VI) eingesetzt werden, wobei der Gewichtsanteil an Diphenolen der Formel (VI a) in den Copolycarbonaten jeweils zwischen 1 und 20 Gew.-%, vorzugsweise zwischen 1,5 und 15 Gew.-% und insbesondere zwischen 2 und 10 Gew.-%, bezogen jeweils auf die Gewichtssumme der eingesetzten Diphenole der Formeln (VI) und (VI a), liegt.

Als Polycarbonate B können auch Mischungen der vorstehend definierten thermoplastischen Polycarbonate verwendet werden, wobei, wenn es sich um Mischungen mit Polydiorganosiloxan-Polycarbonat-Blockcopolymeren handelt, der Gewichtsanteil der Diphenole (VI a), bezogen auf die Gesamtsumme der Diphenole in der Polycarbonatmischung, 1 bis 20 Gew.-% ist.

Die Herstellung der Polycarbonate B ist bekannt. Man setzt z.B. die Diphenole mit Phosgen durch Phasengrenzflächenpolykondensation um oder mit Phosgen nach dem Verfahren in homogener Phase, dem sogenannten Pyridinverfahren. Das Molekulargewicht kann in bekannter Weise durch eine ensprechende Menge an bekannten Kettenabbrechern eingestellt werden (für polydiorganosiloxanhaltige Polycarbonate vgl. DE-OS 3 334 872).

Geeignete Kettenabbrecher sind z.B. Phenol, p-Chlorphenol, p-tert.-Butylphenol oder 2,4,6-Tribromphenol, aber auch langkettige Alkylphenole, wie 4-(1,3-Tetramethylbutyl)-phenol gemäß DE-OS 2 842 005 oder Monoalkylphenol bzw. Diahlkylphenole mit insgesamt 8 bis 20 C-Atomen in den Alkylsubstituenten gemäß deutscher Patentanmeldung P 3 506 472.2, wie 3,5-di-tert.-Butylphenol, p-iso-Octylphenol, p-tert.-Octylphenol, p-Dodecylphenol und 2-(3,5-Dimethyl-heptyl)-phenol und 4-(3,5-Dimethylheptyl)-phenol.

Die Menge an Kettenabbrechern beträgt im allgemeinen 0,5 bis 10 Mol.-%, bezogen auf die Summe der Diphenole (VI) und gegebenenfalls (VI a).

Die Polycarbonate B haben mittlere Molekulargewichte $\overline{M}_w$ (Gewichtsmittel, gemessen z.B. durch Ultrazentrifugation oder Streulichtmessung) von 10 000 bis 200 000, vorzugsweise von 20 000 bis 80 000.

Geeignete Diphenole der Formel (VI) sind z.B. Hydrochinon, Resorcin, 4,4'-Dihydroxydiphenyl, 2,2-Bis-(4-hydroxyphenyl)-propan, 2,4-Bis-(4-hydroxypenyl)-2-methylbutan, 1,1-Bis-(4-hydroxyphenyl)-cyclohexan, 2,2-Bis-(3-chlor-4-hydroxyphenyl)-propan, 2,2-Bis-(3,5-dibrom-4-hydroxyphenyl)-propan.

Bevorzugte Diphenole der Formel (VI) sind 2,2-Bis-(4-hydroxyphenyl)-propan, 2,2-Bis-(3,5-dichlor-4-hydroxyphenyl)-propan und 1,1-Bis-(4-hydroxyphenyl)-cyclohexan.

Geeignete Diphenole der Formel (VI a) sind solche, in denen R Methyl, Ethyl, Propyl, n-Butyl, tert.-Butyl oder Phenyl ist.

Bevorzugte Diphenole der Formel (VI a) sind die der Formel (VI b)

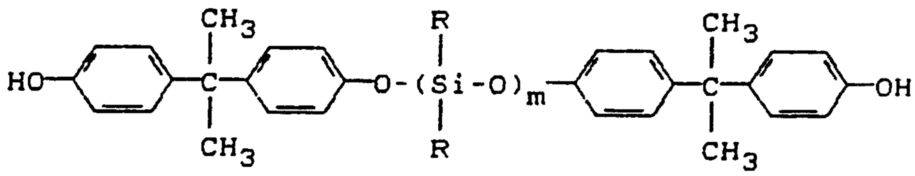

(VI b)

worin die Reste R wie oben definiert sind, bevorzugt Methyl, Ethyl, Propyl, n-Butyl, tert.-Butyl bedeuten und m eine ganze Zahl von 5 bis 100, vorzugsweise von 20 bis 80 ist.

Die Diphenole der Formel (VI a) können z.B. aus den entsprechenden Bis-Chlorverbindungen der Formel (VIII)

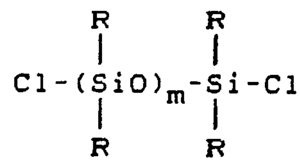

(VIII)

und den Diphenolen der Formel (VI), z.B. gemäß US-PS 3 419 634, Spalte 3, in Kombination mit US-PS 3 189 662 hergestellt werden.

In den Bis-Chlorverbindungen (VIII) haben R und m die gleiche Bedeutung wie in den Diphenolen (VI a) bzw. (VI b).

Die Polycarbonate B können in bekannter Weise verzweigt sein, und zwar vorzugsweise durch den Einbau von 0,05 bis 2,0 Mol.-%, bezogen auf die Summe der eingesetzten Diphenole, an drei- oder mehr als dreifunktionellen Verbindungen, z.B. solchen mit drei oder mehr als drei phenolischen Gruppen.

Bevorzugte Polycarbonate B sind neben dem Bisphenol-A-Homopolycarbonat die Copolycarbonate von Bisphenol A mit bis zu 15 Mol.-%, bezogen auf die Mol.-Summen an Diphenolen, an 2,2-Bis-(3,5-dibrom-4-hydroxyphenyl)-propan oder die Copolycarbonate der Diphenole der Formel (VI) mit 1 bis 20 Gew.-% an Diphenolen der Formel (VI a), vorzugsweise der Formel (VI b), bezogen jeweils auf die Gewichtssumme der Diphenole (VI) und (VI a) bzw (VI) und (VI b).

Pfronfpolymerisate C

Zur Herstellung der Pfropfpolymerisate C geeignete Dienkautschuke C.2 sind insbesondere Polybutadien, ButadienCopolymerisate mit bis zu 30 Gew.-%, bezogen auf das Kautschukgewicht, anderen ethylenisch ungesättigten Monomeren wie Styrol oder Acrylnitril, oder Estern von Acryl- oder Methacrylsäure mit $C_1$-$C_4$-Alkoholen wie Methylmethacrylat, Ethylacrylat, Methylacrylat oder Ethylmethacrylat, Polyisopren oder Polychloropren. Bevorzugt ist reines Polybutadien.

Diese Kautschuke C.2 liegen in Form wenigstens partiell vernetzter Teilchen eines mittleren Teilchendurchmessers $d_{50}$ von 0,09 bis 1 µm, insbesondere 0,1 bis 0,6 µm vor.

Diese Pfropfpolymerisate C können durch radikalische Polymerisation der Monomeren C.1.1 und C.1.2 in Gegenwart der Kautschuke erhalten werden.

Diese Pfropfpolymerisation kann bei 40 bis 90° C in Suspension, Dispersion oder Emulsion durchgeführt werden. Bevorzugt ist die kontinuierliche oder diskontinuierliche Emulsionspolymerisation. Die Pfropfpolymerisation kann mit radikalischen Initiatoren (z.B. Peroxiden, Azoverbindungen, Hydroperoxiden, Persulfaten Perphosphaten) durchgeführt werden und erfordert gegebenenfalls anionische Emulgatoren z.B. Carboxoniumsalze, Sulfonsäuresalze oder organische Sulfate. Dabei bilden sich die Pfropfpolymerisate mit hohen Pfropfausbeuten, d.h. ein großer Anteil des Polymerisates der Monomeren C.1 wird an den Kautschuk C.2 chemisch gebunden.

Die Pfropfpolymerisate C erhält man durch Pfropfpolymerisation von 5 bis 90, vorzugsweise 20 bis 80 Gewichtsteilen eines Vinylmonomeren oder eines Vinylmonomerengemisches C.1 auf 10 bis 95, vorzugsweise 20 bis 80 Gew.-Teilen eines Kautschuks C.2.

Geeignete Vinylmonomerenmischungen bestehen aus 50 bis 95 Gew.-Teilen Styrol, α-Methylstyrol (oder anderen Alkyl- oder halogenkernsubstituierten Styrolen), Methacrylsäureestern oder Acrylsäureestern

und aus 5 bis 50 Gew.-Teilen Acrylnitril, Methacrylnitril, Methacrylsäureestern, Acrylsäureestern, Maleinsäureanhydrid oder substituierten Maleinimiden andererseits.

Geeignete Methacrylsäureester und Acrylsäureester sind solche mit einwertigen Alkoholen mit 1 bis 8 C-Atomen. Besonders bevorzugt sind Methylmethacrylat, Ethylmethacrylat und Propylmethacrylat.

Bevorzugte Monomeren zum Aufbau der Pfropfhülle sind Styrol/Acrylnitril- und Styrol/Maleinsäureanhydrid-Gemische. Als weitere Monomere können zusätzlich kleine Mengen Acrylsäureester von primären oder sekundären aliphatischen $C_2$-$C_{10}$-Alkoholen, vorzugsweise n-Butylacrylat, oder Acryl- oder Methacrylsäureester des tert.-Butanols, vorzugsweise t-Butylacrylat, mitverwendet werden.

Bevorzugte Pfropfpolymerisate C sind z.B. mit Styrol, Acrylnitril, Methacrylsäurealkylestern, Acrylsäurealkylestern oder Mischungen daraus, Polybutadiene oder Butadien/Styrol-Copolymerisate. Solche Copolymerisate sind beispielsweise in der DE-OS 1694 173 beschrieben.

Besonders bevorzugte Polymerisate C sind ABS-Polymerisate, wie sie in der DE-OS 2 035 390 und in der DE-OS 2 248 242 beschrieben sind.

Bei der Herstellung der Pfropfpolymerisate C bilden sich im allgemeinen neben dem eigentlichen Pfropfcopolymerisat auch freie Polymerisate bzw. Copolymerisate der die Pfropfhülle bildenden Pfropfmonomeren.

Pfropfpolymerisate C sind die durch Polymerisation der Pfropfmonomeren C.1 in Gegenwart des Kautschukes C.2 erhaltene Produkte, genau genommen also Gemische aus Pfropfcopolymerisat und freiem Polymerisat der Pfropfmonomeren C.1

Die erfindungsgemäßen Formmassen weisen optimale Eigenschaften auf, wenn die Menge an freiem Polymerisat 50 Gew.-%, vorzugsweise 30 Gew.-%, insbesondere 20 Gew.-%, bezogen auf Komponente C, nicht übersteigt.

Die erfindungsgemäßen Formmassen können weitere, für aromatische Polycarbonate sowie Pfropfpolymerisate bekannte Zusätze, wie Stabilisatoren, Pigmente, Entformungsmittel, Flammschutzmittel und Antistatika in den üblichen Mengen enthalten.

Die erfindungsgemäßen Formmassen können hergestellt werden, indem man die Bestandteile in bekannter Weise vermischt und bei erhöhten Temperaturen, vorzugsweise bei 200 bis 350 °C, in üblichen Vorrichtungen, wie Innenknetern, Extrudern oder Doppelwellenschnecken, schmelzcom poundiert oder schmelzextrudiert. Die einzelnen Komponenten können nacheinander oder gleichzeitig gemischt werden.

Weiterer Gegenstand der Erfindung ist also ein Verfahren zur Herstellung der beschriebenen Formmassen durch Mischen der Komponenten bei erhöhter Temperatur.

Die erfindungsgemäßen Formmassen können zur Herstellung von Formkörpern jeder Art, z.B. durch Spritzgießen, verwendet werden Beispiele für Formkörper sind: Gehäuseteile (z.B. für Haushaltsgeräte wie Saftpressen, Kaffeemaschinen, Mixer), Abdeckplatten für das Baugewerbe oder Automobilteile. Sie werden außerdem für elektrische Geräte, z.B. für Steckerleisten, eingesetzt, weil sie sehr gute elektrische Eigenschaften haben.

Formkörper können auch durch Tiefziehen aus vorher hergestellten Platten oder Folien hergestellt werden.

Weiterer Gegenstand der Erfindung ist also die Verwendung der beschriebenen Formmassen zur Herstellung von Formkörpern.

Beispiele

Angegebene Teile bedeuten Gewichtsteile.

Polycarbonat A

1436,4 g (6,3 Mol) Bisphenol A (2,2-Bis(4-hydroxyphenyl)-propan, 2387,0 g (7,7 Mol) 1,1-Bis-(4-hydroxyphenyl)-3,3,5-trimethylcyclohexan, 7476,0 g (84 Mol) 45%ige NaOH und 33,7 l Wasser werden in einer Inertgas-Atmosphäre unter Rühren gelöst. Dann fügt man eine Lösung von 36,9 g (0,392 Mol) Phenol in 11 l Methylenchlorid und 13 l Chlorbenzol zu. In die gut gerührte Lösung wurden bei pH 13 bis 14 und 21 bis 25 °C 2772 g (28 Mol) Phosgen eingeleitet. Danach werden 14 ml Ethylpiperidin zugegeben und noch 45 Minuten gerührt. Die bisphenolatfreie wäßrige Phase wird abgetrennt, die organische Phase nach Ansäuern mit Phosphorsäure mit Wasser elektrolytfrei gewaschen und vom Lösungsmittel befreit. Das Polycarbonat zeigte eine rel. Lösungsviskosität von 1,30. Die Glastemperatur des Polymers wurde zu 206 °C bestimmt (DSC).

Polycarbonat B

Lineares Polycarbonat auf Basis Bisphenol A mit einer relativen Lösungsviskosität $\eta_{rel}$ von 1,26 bis 1,28, gemessen in $CH_2Cl_2$ bei 25° C und einer Konzentration von 0,5 g/ml.

Pfropfpolymerisat C

Pfropfpolymerisat von 50 Gew.-Teilen eines Copolymerisats aus Styrol und Acrylnitril im Verhältnis 72 : 28 auf 50 Gew.-Teile teilchenförmigen Polybutadienkautschuk (mittlerer Teilchendurchmesser $d_{50}$ = 0,4 µm), hergestellt durch Emulsionspolymerisation.

Herstellung und Prüfung der erfindungsgemäßen Formmassen

A, B und C wurden auf einem 1,3 l-Innenkneter bei Temperaturen zwischen 250 und 320° C aufgeschmolzen und homogenisiert.

Von den Formmassen wurden auf einer Spritzgußmaschine Stäbe der Abmessung 80 x 10 x 4 mm (Verarbeitungstemperatur: 280° C) hergestellt, an denen die Kerbschlagzähigkeit (nach Methode ISO 180) bei Zimmertemperatur gemessen wurde.

Die Wärmeformbeständigkeit nach Vicat B wurde gemäß DIN 53 460 bestimmt.

Wie aus Tabelle 1 ersichtlich, zeigen die erfindungsgemäßen Beispiele B bis D gegenüber dem Vergleichsbeispiel A wesentlich höhere Vicat-Temperaturen bei hoher Kerbschlagzähigkeit.

Tabelle 1

| Zusammensetzung der Formmassen und ihre Eigenschaften | | | | | |
|---|---|---|---|---|---|
| Beispiel | A | B | C | Vicat B 120 (° C) | Kerbschlagzähigkeit $a_k$ bei RT (kj/m²) |
| | (Gew.-%) | | | | |
| A (Vergleich) | - | 80 | 20 | 141 | 58 |
| B | 20 | 60 | 20 | 150 | 55 |
| C | 40 | 40 | 20 | 161 | 46 |
| D | 60 | 20 | 20 | 171 | 37 |

**Ansprüche**

1. Als thermoplastische Formmassen geeignete Polymeren-Gemische aus

A) 5 bis 99 Gew.-Teilen, bezogen auf das Polymeren-Gemisch, eines aromatischen Polycarbonats, das bifunktionelle Struktureinheiten der Formel (I) enthält

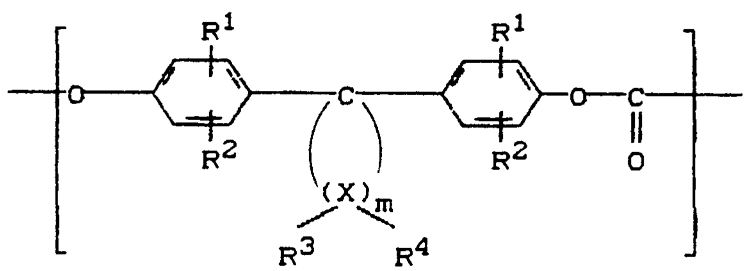

(I)

worin

$R^1$ und $R^2$ unabhängig voneinander Wasserstoff, Halogen, bevorzugt Chlor oder Brom, $C_1$-$C_8$-Alkyl, $C_5$-$C_6$-

Cycloalkyl, $C_6$-$C_{10}$-Aryl, bevorzugt Phenyl, und $C_7$-$C_{12}$-Aralkyl, bevorzugt Phenyl-$C_1$-$C_4$-Alkyl, insbesondere Benzyl,
m eine ganze Zahl von 4 bis 7, bevorzugt 4 oder 5,
$R^3$ und $R^4$ für jedes X individuell wählbar, unabhängig voneinander Wasserstoff oder $C_1$-$C_6$-Alkyl und
X Kohlenstoff bedeuten,
mit der Maßgabe, daß an mindestens einem Atom X $R^3$ und $R^4$ gleichzeitig Alkyl bedeuten
und

B) 5 bis 99 Gew.-Teilen, bezogen auf das Polymeren-Gemisch eines aromatischen Polycarbonats auf Basis von Diphenolen der Formel (VI)

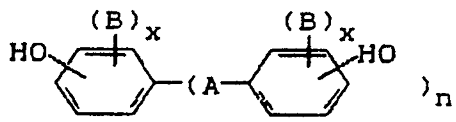

(VI)

worin
A eine Einfachbindung, $C_1$-$C_5$-Alkylen, $C_2$-$C_5$-Alkyliden, ein $C_5$-$C_6$-Cycloalkyliden, -S-, -$SO_2$- oder ein Rest gemäß Formel (VII)

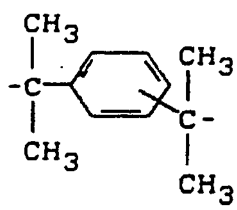

(VII)

ist,
B Wasserstoff, lineares $C_1$-$C_{10}$-Alkyl, verzweigtes $C_3$-$C_{20}$-Alkyl, $C_6$-$C_{20}$-Aryl oder Halogen wie Chlor oder Brom ist,
x 0, 1 oder 2 und
n 1 oder 0 sind,
und gegebenenfalls zusätzlich der Formel (VI a)

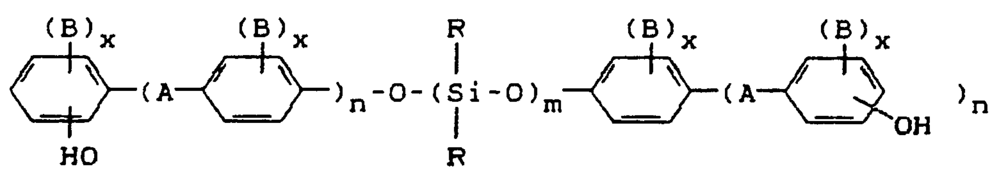

(VI a)

worin A, B, x und n die zuvor genannte Bedeutung haben, die Reste R gleich oder verschieden sind und linearem $C_1$-$C_{10}$-Alkyl, verzweigtem $C_3$-$C_{20}$-Alkyl, $C_6$-$C_{20}$-Aryl entsprechen und m eine ganze Zahl zwischen 5 und 100 ist
und

C) 1 bis 95 Gew.-Teilen, bezogen auf das Polymeren-Gemisch eines Pfropfpolymerisats aus

C.1 5 bis 90, vorzugsweise 20 bis 80 Gewichtsteilen einer Mischung aus

C.1.1 50 bis 98 Gew.-% Styrol, α-Methylstyrol, $C_1$-$C_4$-Alkyl- oder Halogen-kernsubstituierten Styrolen, Methacrylsäureestern, Acrylsäureestern oder Mischungen daraus und

C.1.2 5 bis 50 Gew.-% Acrylnitril, Methacrylnitril, Methacrylsäureester, Acrylsäureestern, Maleinsäureanhydrid, $C_1$-$C_4$-Alkylsubstituierten Maleinimiden, Phenyl-N-substituierten Maleinimiden oder Mischungen daraus, auf

C.2 10 bis 95, vorzugsweise 20 bis 80 Gew.-Teile eines Dienkautschuks mit einem mittleren Teilchendurchmesser $d_{50}$ von 0,09 bis 1 µm und einem Gelgehalt von mehr als 50 Gew.-%, bezogen auf C.2.

2. Gemisch gemäß Anspruch 1, zusätzlich enthaltend mindestens einen Stabilisator, ein Pigment, Fließhilfsmittel, Entformungsmittel, Flammschutzmittel und/oder Antistatikum.

3. Verfahren zur Herstellung der Polymeren-Gemische gemäß Anspruch 1, dadurch gekennzeichnet, daß man die Komponente A, B und C sowie gegebenenfalls Stabilisatoren, Pigmente, Fließhilfsmittel, Entformungsmittel, Flammschutzmittel, und/oder Antistatika in bekannter Weise vermischt und bei erhöhter Temperatur in üblichen Vorrichtungen schmelzcompoundiert oder schmelzextrudiert.

4. Verwendung der Gemische gemäß Anspruch 1 zur Herstellung von Formkörpern.